# EUROPEAN PATENT APPLICATION

(11) **EP 4 472 230 A1**
(43) Date of publication of application: **04.12.2024**
(21) Application number: 24174018.2
(22) Date of filing: 03.05.2024
(51) Int. Cl.: H04N 25/773

(54) **PHOTOELECTRIC CONVERSION DEVICE, MOVABLE APPARATUS, PHOTOELECTRIC CONVERSION METHOD, AND STORAGE MEDIUM**

(30) Priority: 30.05.2023 JP 2023088836
(71) Applicant: Canon Kabushiki Kaisha, Ohta-Ku Tokyo 1468501 (JP)
(72) Inventor: SAITO, Tadanori, Tokyo, 146-8501 (JP); KIMURA, Takayuki, Tokyo, 146-8501 (JP); FUJIMORI, Soya, Tokyo, 146-8501 (JP); NABESHIMA, Takuya, Tokyo, 146-8501 (JP); YOKOYAMA, Junya, Tokyo, 146-8501 (JP)
(74) Representative: TBK

(57) **Abstract**

A photoelectric conversion device includes a plurality of pixels each including a sensor unit that emits pulses according to reception of photons, and a counter that counts the number of pulses, and a control unit that divides a frame into a plurality of subframes, and causes the count at the end of each subframe and the end of the frame to be output. Allows for faster image recognition processing.

## Description

### BACKGROUND OF THE INVENTION

### Field of the Invention

The present invention relates to a photoelectric conversion device, a movable apparatus, a photoelectric conversion method, a storage medium, and the like.

### Description of the Related Art

In recent years, photoelectric conversion devices have been developed that digitally count the number of photons incident on an avalanche photodiode (APD) and output a counted value from a pixel as a photoelectrically converted digital signal.

Japanese Patent No. 7223070 discloses a configuration in which a photoelectric conversion device having an APD can output a plurality of videos whose accumulation periods overlap each other, thereby enabling continuous imaging even with a low illuminance.

However, in Japanese Patent No. 7223070, for example, when assuming an imaging element for an in-vehicle camera installed on a movable apparatus, recognition processing is performed in units of frames in normal sensor driving, and thus, in the case of 30 fps, recognition processing can only be performed every 33.3 ms. Thus, in an in-vehicle camera, even when an object jumps in immediately after frame switching, recognition processing cannot be performed until the end of a frame.

Furthermore, in order to suppress flicker caused by LED traffic lights in-vehicle cameras, an accumulation period that is equal to or longer than an LED blinking cycle time (for example, 10 msec at 100 Hz) is often set, and an accumulation period is set to be longer especially under low illumination to capture a bright image. However, when an accumulation period becomes longer, subject blur occurs in a subject that moves at high speed, and a blur occurs when a camera is moving at high speed even when the subject is stationary, resulting in a problem that a recognition rate decreases.

### SUMMARY OF THE INVENTION

One aspect of a photoelectric conversion device of the present invention is a photoelectric conversion device including a plurality of pixels each including a sensor unit that emits pulses according to incident photons, and a counter that counts the number of pulses, and a control unit that generates a signal based on a difference between a count value of the counter at the start of an accumulation period and a count value of the counter at the end of the accumulation period, and performs control so that a signal generated during a first accumulation period is output between the end of the first accumulation period and the end of a second accumulation period, the first accumulation period and the second accumulation period being included in a full frame period, and the first accumulation period being shorter than the second accumulation period.

Further features of the present invention will become apparent from the following description of embodiments with reference to the attached drawings.

### BRIEF DESCRIPTION OF THE DRAWINGS

Fig. 1 is a diagram showing a configuration example of a photoelectric conversion element according to an embodiment of the present invention.
Fig. 2 is a diagram showing a configuration example of a sensor board 11.
Fig. 3 is a diagram showing a configuration example of a circuit board 21.
Fig. 4 is a diagram showing an example of an equivalent circuit of a pixel 101 and a signal processing circuit 103 corresponding to the pixel 101 in Figs. 2 and 3.
Fig. 5 is a diagram schematically showing a relationship between an operation of an APD 201 and an output signal.
Fig. 6 is a functional block diagram of a photoelectric conversion device 600 and a movable apparatus 700 according to the embodiment.
Fig. 7 is a diagram for describing an example of a photoelectric conversion method performed by a camera control unit 605 according to the embodiment.
Fig. 8 is a diagram for describing an example of an output via a buffer according to the embodiment.
Fig. 9 is a diagram showing an example of an image of a plurality of divided frames.
Fig. 10 is a diagram showing an example of a relationship between a counter circuit and a buffer in the embodiment.
Fig. 11 is a flowchart showing details of an example of driving of the photoelectric conversion element in the embodiment.
Fig. 12 is a flowchart showing a continuation of Fig. 11.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

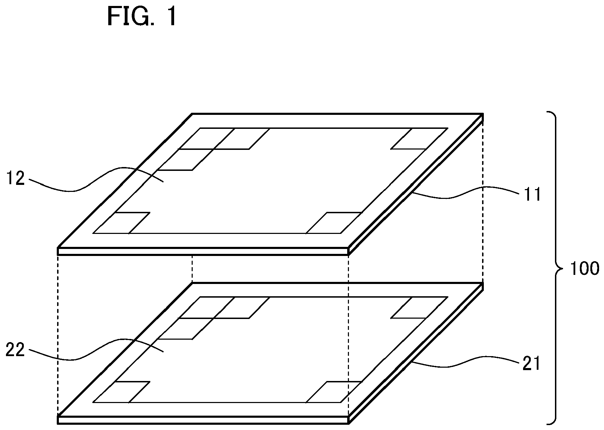

Fig. 1 is a diagram showing a configuration example of a photoelectric conversion element according to an embodiment of the present invention. In the following, a photoelectric conversion element 100 will be described by taking a photoelectric conversion device having a so-called laminated structure, in which two substrates, that is, a sensor board 11 and a circuit board 21, are laminated and electrically connected as an example.

However, a so-called non-laminated structure in which a configuration included in the sensor board and a configuration included in the circuit board are disposed in a common semiconductor layer may be used. The sensor board 11 includes a pixel area 12. The circuit board 21 includes a circuit area 22 that processes signals detected in the pixel area 12.

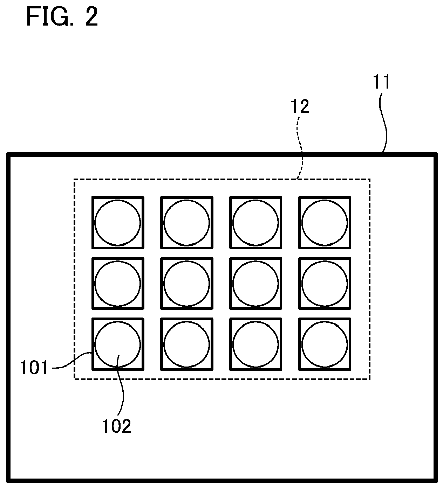

Fig. 2 is a diagram showing a configuration example of the sensor board 11. The pixel area 12 of the sensor board 11 includes a plurality of pixels 101 disposed two-dimensionally in a plurality of rows and columns. The pixel 101 includes a photoelectric conversion unit 102 including an avalanche photodiode (hereinafter referred to as an APD).

Here, the photoelectric conversion unit 102 functions as a sensor unit that emits pulses according to incident photons. The number of rows and columns of a pixel array forming the pixel area 12 is not particularly limited.

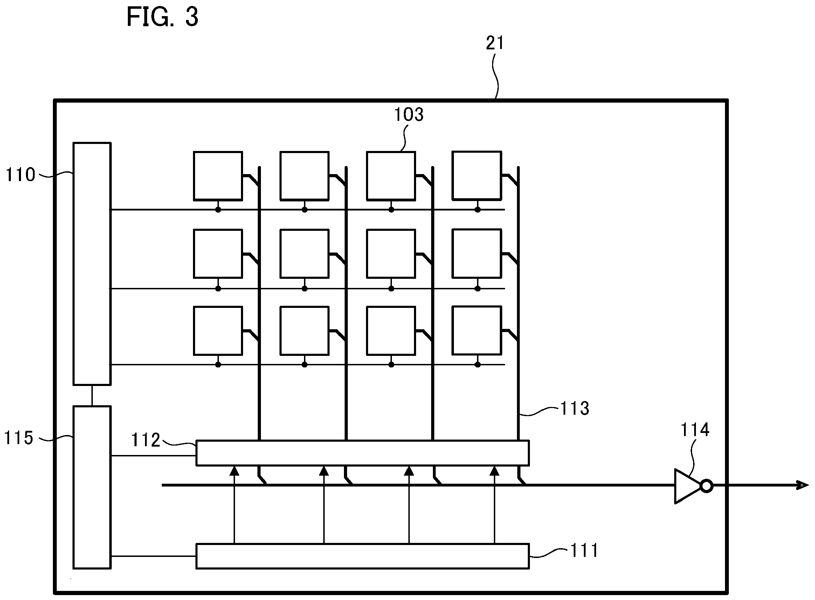

Fig. 3 is a diagram showing a configuration example of the circuit board 21. The circuit board 21 includes a signal processing circuit 103 that processes charges photoelectrically converted by the photoelectric conversion units 102 in Fig. 2, a readout circuit 112, a control pulse generation unit 115, a horizontal scanning circuit 111, a vertical signal line 113, a vertical scanning circuit 110, and an output circuit 114.

The vertical scanning circuit 110 receives control pulses supplied from the control pulse generation unit 115, and sequentially supplies the control pulses for each row to a plurality of pixels arranged in the row direction. As the vertical scanning circuit 110, a logic circuit such as a shift register or an address decoder is used.

Signals output from the photoelectric conversion units 102 of the respective pixels are processed by the signal processing circuits 103. The signal processing circuit 103 is provided with a counter, a memory, and the like, and digital values are stored in the memory. The horizontal scanning circuit 111 inputs control pulses for sequentially selecting columns to the signal processing circuit 103 in order to read signals from the memories of the respective pixels storing digital signals.

A signal is output to the vertical signal line 113 from the signal processing circuit 103 of the pixel in the row selected by the vertical scanning circuit 110. The signal output to the vertical signal line 113 is output to the outside of the photoelectric conversion element 100 via the readout circuit 112 and the output circuit 114. The readout circuit 112 includes a plurality of buffers connected to the respective vertical signal lines 113.

As shown in Figs. 2 and 3, a plurality of signal processing circuits 103 are disposed in an area overlapping the pixel area 12 in a plan view. The vertical scanning circuit 110, the horizontal scanning circuit 111, the readout circuit 112, the output circuit 114, and the control pulse generation unit 115 are disposed to overlap each other between an edge of the sensor board 11 and an edge of the pixel area 12 in a plan view.

In other words, the sensor board 11 has the pixel area 12 and a non-pixel area disposed around the pixel area 12. Then, the vertical scanning circuit 110, the horizontal scanning circuit 111, the readout circuit 112, the output circuit 114, and the control pulse generation unit 115 are disposed in an area that overlaps the non-pixel area in a plan view.

The arrangement of the vertical signal line 113, the readout circuit 112, and the output circuit 114 is not limited to the example shown in Fig. 3. For example, the vertical signal line 113 may be disposed to extend in the row direction, and the readout circuit 112 may be disposed at the end to which the vertical signal line 113 extends. Further, the signal processing circuit 103 does not necessarily have to be provided in every photoelectric conversion unit, and the signal processing circuit 103 may be configured such that one signal processing circuit is shared by a plurality of photoelectric conversion units and sequentially perform signal processing.

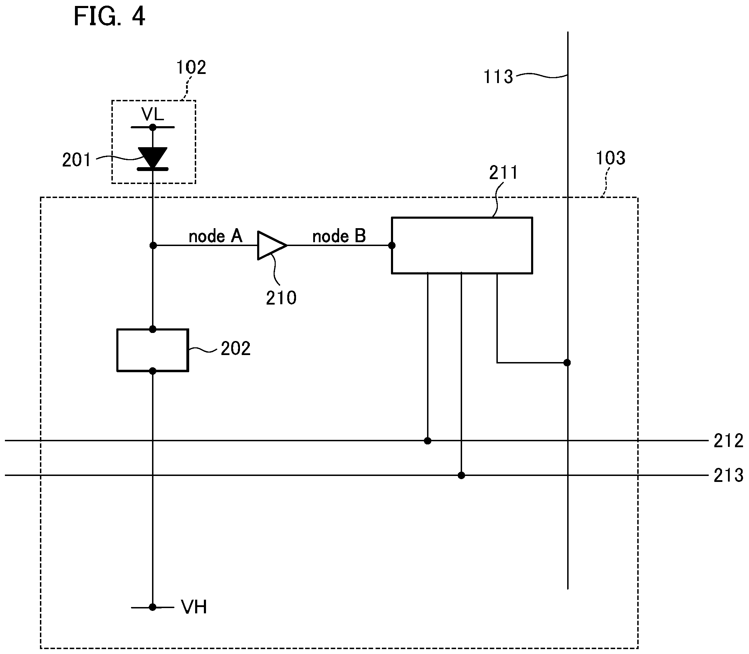

Fig. 4 is a diagram showing an example of an equivalent circuit of the pixel 101 in Figs. 2 and 3 and the signal processing circuit 103 corresponding to the pixel 101. As shown in Fig. 4, each pixel 101 includes the photoelectric conversion unit 102 as a sensor unit, a counter circuit 211, and the like.

An APD 201 included in the photoelectric conversion unit 102 generates charge pairs according to incident light by photoelectric conversion. One node (anode) of two nodes of the APD 201 is connected to a power line to which a voltage VL (first voltage) is supplied. Further, the other node (cathode) of the two nodes of the APD 201 is connected to a power line to which a voltage VH (second voltage) higher than the voltage VL is supplied.

A reverse bias voltage is supplied to the anode and the cathode of the APD 201 so that the APD 201 performs an avalanche multiplication operation. By supplying such a voltage, charges generated by incident light cause avalanche multiplication, and an avalanche current is generated.

In addition, when a reverse bias voltage is supplied, there is a Geiger mode in which an operation is performed with a voltage difference between an anode and a cathode being greater than a breakdown voltage, and a linear mode in which an operation is performed with a voltage difference between an anode and a cathode near or less than a breakdown voltage. An APD that operates in the Geiger mode is referred to as an SPAD. In the case of the SPAD, a voltage VL (first voltage) is, for example, -30 V, and a voltage VH (second voltage) is, for example, 1 V.

The signal processing circuit 103 includes a quench element 202, a waveform shaping unit 210, and a counter circuit 211. The quench element 202 is connected to a power line to which a drive voltage VH is supplied and one node out of the anode and the cathode of the APD 201.

The quench element 202 functions as a load circuit (quench circuit) during signal multiplication by avalanche multiplication, and has a function of suppressing a voltage supplied to the APD 201 to suppress avalanche multiplication (quench operation). Furthermore, the quench element 202 has a function of returning a voltage supplied to the APD 201 to a voltage VH by applying a current equivalent to a voltage drop due to the quench operation (recharge operation).

Fig. 4 shows an example in which the signal processing circuit 103 includes the waveform shaping unit 210 and the counter circuit 211 in addition to the quench element 202.

The waveform shaping unit 210 shapes a voltage change of the cathode of the APD 201 obtained during photon detection and outputs a pulse signal. As the waveform shaping unit 210, for example, an inverter circuit is used. Although Fig. 4 shows an example in which one inverter is used as the waveform shaping unit 210, a circuit in which a plurality of inverters are connected in series may be used, or other circuits having a waveform shaping effect may be used.

The counter circuit 211 counts the number of pulses output from the waveform shaping unit 210 and stores the count value. Furthermore, when a control pulse RES is supplied via a drive line (RES) 212, a signal stored in the counter circuit 211 is reset. Here, the counter circuit 211 generates a signal based on a difference between a count value at the start of an accumulation period and a count value at the end of the accumulation period.

Further, when the control pulse SEL is supplied to the counter circuit 211 from the vertical scanning circuit 110 in Fig. 3 via the drive line (SEL) 213 (not shown in Fig. 3) in Fig. 4, the counter circuit 211 stops counting the number of pulses and outputs the count value to the vertical signal line 113.

A switch such as a transistor may be disposed between the quench element 202 and the APD 201 or between the photoelectric conversion unit 102 and the signal processing circuit 103 to switch electrical connection. Similarly, the supply of a voltage VH or a voltage VL supplied to the photoelectric conversion unit 102 may be electrically switched using a switch such as a transistor.

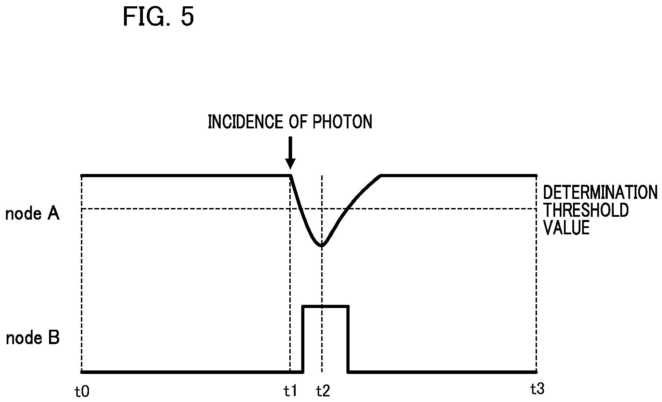

Fig. 5 is a diagram schematically showing a relationship between an operation of the APD 201 and an output signal. An input side of the waveform shaping unit 210 is a node A, and an output side is a node B. A potential difference between VH and VL is applied to the APD 201 between time t0 and time t1. When a photon is incident on the APD 201 at time 11, avalanche multiplication occurs in the APD 201, an avalanche multiplication current flows through the quench element 202, and the voltage of the node A drops.

When a voltage drop amount is further increased and a potential difference applied to the APD 201 is reduced, avalanche multiplication of the APD 201 stops as at time t2, and the voltage level of the node A no longer drops below a certain fixed value.

Thereafter, a current that compensates for a voltage drop from the voltage VL flows through the node A between time t2 and time t3, and the node Ais still at the original potential level at time t3. At this time, a portion of an output waveform of the node A which exceeds a certain threshold value is waveform-shaped by the waveform shaping unit 210 and output as a pulse signal by the node B.

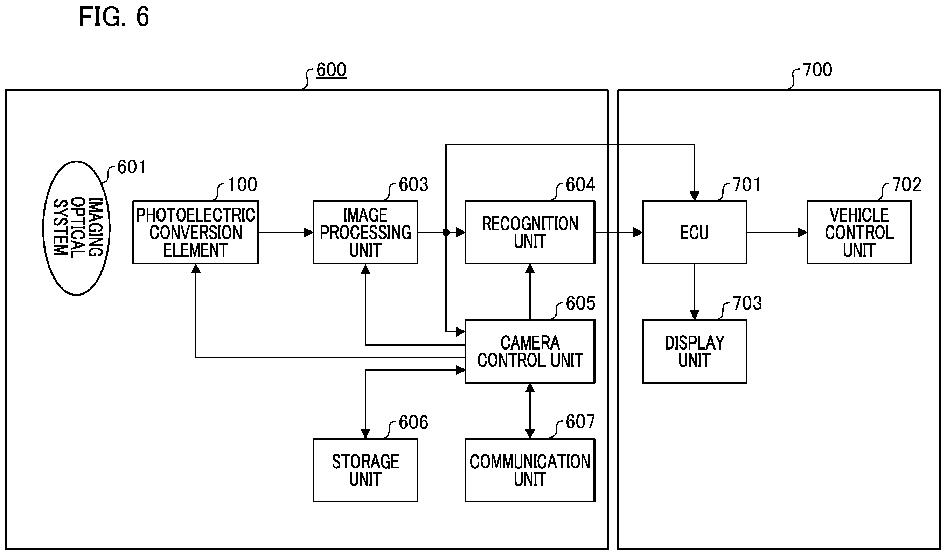

Next, a photoelectric conversion device 600 and a movable apparatus 700 according to the embodiment will be described. Fig. 6 is a functional block diagram of the photoelectric conversion device 600 and the movable apparatus 700 according to the embodiment. Some of functional blocks shown in Fig. 6 can be realized by causing a computer (not shown) included in the photoelectric conversion device 600 and the movable apparatus 700 to execute a computer program stored in a memory (not shown) as a storage medium.

However, some or all of them may be realized by hardware. As the hardware, a dedicated circuit (ASIC), a processor (reconfigurable processor, DSP), and the like can be used. Furthermore, the respective functional blocks shown in Fig. 6 do not need to be built into the same housing, and may be configured as separate devices connected to each other via signal paths.

The photoelectric conversion device 600 includes the photoelectric conversion element 100 described in Figs. 1 to 5, an imaging optical system 601, an image processing unit 603, a recognition unit 604, a camera control unit 605, a storage unit 606, a communication unit 607, and the like. The photoelectric conversion element 100 is constituted by the avalanche photodiode described in Figs. 1 to 5 for photoelectrically converting an optical image.

The photoelectric conversion device according to the present embodiment is mounted on the movable apparatus 700, and a camera unit constituted by a set of the imaging optical system 601 and the photoelectric conversion element 100 is disposed to image at least one direction, for example, the front, rear, or side of the movable apparatus. A plurality of camera units may be provided in the movable apparatus 700.

The image processing unit 603 performs image processing such as black level correction, gamma curve adjustment, noise reduction, digital gain adjustment, demosaic processing, and data compression on an image signal acquired by the photoelectric conversion element 100 to generate a final image signal. When each of the pixels of the photoelectric conversion element 100 has an on-chip color filter of RGB or the like, the image processing unit 603 also performs processing such as white balance correction and color conversion.

Furthermore, when a read image is used for a plurality of purposes such as viewing and recognition, it is preferable to store different image processing parameters in advance for each image use application and to switch the image processing parameters in association with the switching of the image use application.

Further, an output of the image processing unit 603 is supplied to the recognition unit 604, an electric control unit (ECU) 701 of the movable apparatus 700, and the camera control unit 605. The recognition unit 604 recognizes a subject by performing image recognition based on an image signal. That is, subjects such as people, animals, vehicles, traffic lights, and signs around the movable apparatus 700 are recognized and their types are identified.

A recognition result obtained by the recognition unit 604 is output to the ECU 701. In the present embodiment, the movable apparatus 700 will be explained using, for example, a car as an example, but the movable apparatus can be any movable object such as an airplane, a train, a ship, a drone, an AGV, or a robot.

The camera control unit 605 has a built-in CPU as a computer and a built-in memory that stores a computer program, and controls each part of the photoelectric conversion device 600 by causing the CPU to execute the computer program stored in the memory.

The camera control unit 605 controls the length of an accumulation period (photoelectric conversion period) of each frame of the photoelectric conversion element 100, the timing of a control signal CLK, and the like via, for example, the control pulse generation unit of the photoelectric conversion element 100. Further, the camera control unit 605 has a function of setting parameters for various image processing in the image processing unit 603, a function of controlling the recognition unit 604, and a function of acquiring recognition results.

The storage unit 606 includes a recording medium such as a memory card and a hard disk, and can store and read image signals. The communication unit 607 includes a wireless or wired interface, and outputs a generated image signal to the outside of the photoelectric conversion device 600 and receives various signals from the outside.

The communication unit 607 may perform wired communication in accordance with standards such as SPI or I2C as an interface, or may perform communication using a wireless LAN method such as Wi-Fi, Bluetooth (registered trademark), or the like.

The ECU 701 has a built-in CPU as a computer and a built-in memory that stores a computer program, and controls each part of the movable apparatus 700 by causing the CPU to execute the computer program stored in the memory.

An output of the ECU 701 is supplied to the vehicle control unit 702 and the display unit 703. The vehicle control unit 702 functions as a movement control unit that controls movement (driving, stopping, direction control, and the like) of a vehicle as a movable apparatus based on the output of the ECU 701. Further, the vehicle control unit 702 as a movement control unit controls the movable apparatus based on a recognition result output from the recognition unit.

Further, the display unit 703 includes a display element such as a liquid crystal device or an organic EL, and is mounted on the movable apparatus 700. The display unit 703 displays an image acquired by the photoelectric conversion element 100, a recognition result acquired by the recognition unit 604, and various information regarding a driving state of the vehicle, and the like to a driver of the movable apparatus 700 using, for example, a GUI based on the output of the ECU 701.

The image processing unit 603, the recognition unit 604, and the like in Fig. 6 may not also be mounted on the movable apparatus 700, or may be provided in, for example, an external terminal or the like for remotely controlling the movable apparatus 700 or monitoring the running of the movable apparatus, the external terminal being provided separately from the movable apparatus 700.

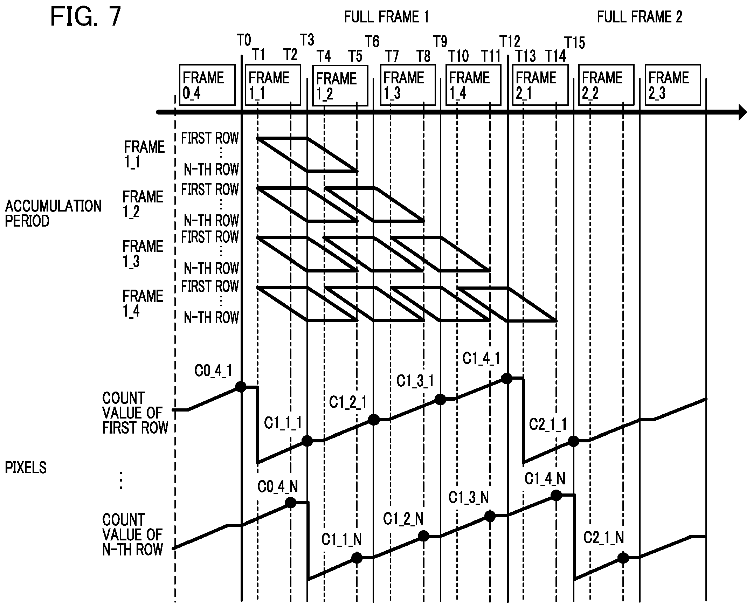

Fig. 7 is a diagram for describing an example of a photoelectric conversion method by the camera control unit 605 according to the embodiment. In the present embodiment, photoelectric conversion is periodically driven, for example, at 30 full frames/second. Further, a frame corresponding to one vertical period having a length of 33.3 ms is referred to as a full frame, and each of four divided parts of the full frame is referred to as a frame.

That is, as shown in Fig. 7, a full frame 1 from time T0 to time T12 is divided into a frame 1_1, a frame 1_2, a frame 1_3, and a frame 1_4 which have equal periods (8.33 ms).

Assuming that the signal processing circuits 103 in Fig. 3 are arranged in N rows and M columns, a first row of the frame 1_1 has an accumulation period (photoelectric conversion period) from time T1 to time T3, and an N-th row of the frame 1_1 has an accumulation period (photoelectric conversion period) from time T3 to time T5.

From a second row to an N-1-th row of the frame 1_1, an accumulation start time is sequentially delayed by a readout time of one row, and the rows have accumulation periods having the same length. Furthermore, a first row of the frame 1_2 has a total accumulation period from time T1 to time T3 and from time T4 to time T6, and an N-th row of the frame 1_2 has a total accumulation period from time T3 to time T5 and from time T6 to time T8.

From a second row to an N-1-th row of the frame 1_2, an accumulation start time is delayed by a readout time of one row, and the rows have accumulation periods having the same length by sequentially interposing a stop corresponding to a readout time of one row once midway.

Further, a first row of the frame 1_3 has a total accumulation period from time T1 to time T3, time T4 to time T6, and time T7 to time R9, and an N-th row of the frame 1_3 has a total accumulation period from time T3 to time T5, time T6 to time T8, and time T9 to time T11. From a second row to an N-1-th row of the frame 1_3, an accumulation start time is delayed by a readout time of one row, and the rows have accumulation periods having the same length by sequentially interposing a stop corresponding to a readout time of one row twice midway.

Furthermore, a first row of the frame 1_4 has a total accumulation period from time T1 to time T3, time T4 to time T6, time T7 to time R9, and time T10 to time T12. Further, an N-th row of the frame 1_4 has a total accumulation period from time T3 to time T5, time T6 to time T8, time T9 to time T11, and time T12 to time T14.

From a second row to an N-1-th row of the frame 1_4, an accumulation start time is delayed by a readout time of one row, and the rows have accumulation periods having the same length by sequentially interposing a stop corresponding to a readout time of one row three times midway.

The counter circuit 211 in the first row is reset at time T1. Further, the control pulse SEL is supplied to the counter circuit 211 in the first row at time T3 to T4, time T6 to T7, time T9 to T10, and time T12 to T13, and counting is stopped. Thereby, count values C1_1_1, C1_2_1, C1_3_1, and C1_4_1 are stored.

Stored signals for one row are sequentially output from the photoelectric conversion element via a buffer of the readout circuit 112 during an accumulation period. Thereafter, the counter circuit 211 in the first row is reset at time T13. A reset operation is performed at time T1 in the full frame 1 and time T13 in the full frame 2. That is, the counter circuit 211 is reset for each full frame period.

The counter circuit 211 in the N-th row is reset at time T3. Further, the control pulse SEL is supplied to the N-th row counter circuit 211 at time T5 to T6, time T8 to T9, time T11 to T12, and time T14 to T15, and counting is stopped.

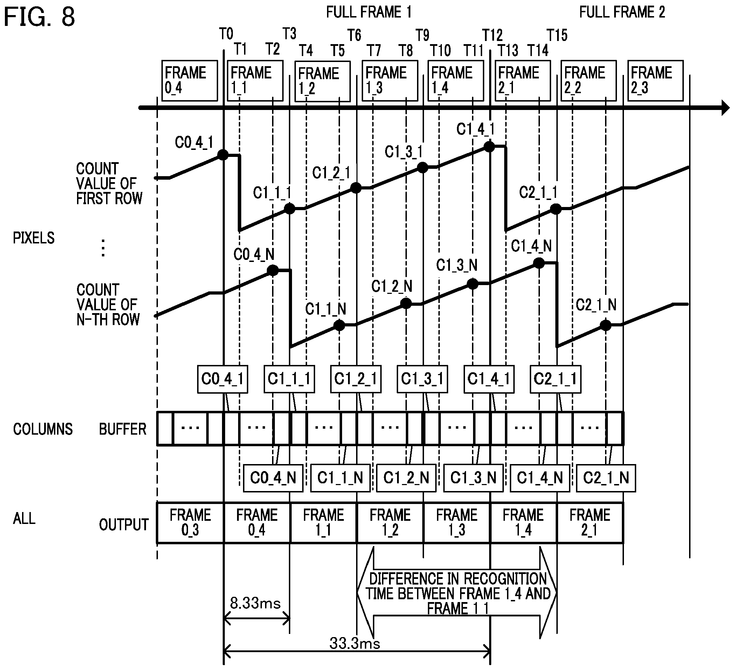

Thereby, count values C1_1_N, C1_2_N, C1_3_N, and C1_4_N are stored. As shown in Fig. 8, stored signals for one row are sequentially output from the photoelectric conversion element via the buffer of the readout circuit 112 during an accumulation period. Fig. 8 is a diagram for describing an example of an output via the buffer according to the embodiment.

Although not shown in the drawing, the counter circuits 211 from the second row to the N-1 row operate at timings that are sequentially delayed by a readout time of one row as compared with the counter circuit 211 in the first row.

In this manner, according to the present embodiment, an image signal of the frame 1_1 is read out from time T3 to time T6 and rapidly processed by the recognition unit 604. Thus, image recognition can be performed rapidly. Similarly, signals of the frame 1_2, the frame 1_3, and the frame 1_4 are read out sequentially from time T6 to T9, from T9 to T12, and from T12 to T15, respectively, and image recognition can be repeated at each frame period.

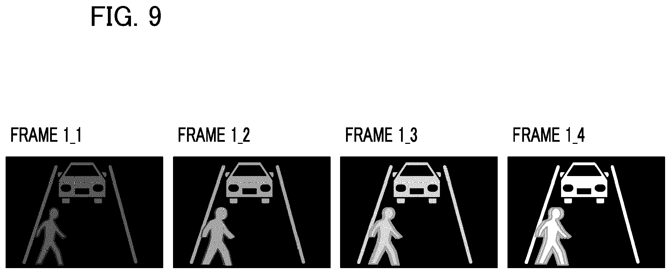

Fig. 9 is a diagram showing an example of images of a plurality of divided frames. As shown in Fig. 9, an image of the frame 1_1 is dark because an accumulation time is short, but there is little subject blur of a person who jumps out. On the other hand, since the images read out at the time of reading the frame 1_2, the frame 1_3, and the frame 1_4 have a long accumulation time in that order, a subject blur is likely to occur. A blur is less likely to occur in stopped vehicles or on white lines, and as an accumulation time becomes longer, a contrast is more likely to be improved.

In this manner, in the present embodiment, one frame has a first accumulation period (for example, time T1 to time T3) and a second accumulation period (for example, a total of time T1 to time T3, time T4 to time T6, time T7 to time T9, and time T10 to time T12). Further, the first accumulation period is shorter than the second accumulation period, and control is performed such that a signal generated during the first accumulation period is output between the end of the first accumulation period and the end of the second accumulation period.

Furthermore, in the present embodiment, the first accumulation period and the second accumulation period overlap each other, and the first accumulation period and the second accumulation period start at the same time. Further, the end of the second accumulation period in the first row is the end (time T12) of a full frame period (one vertical period). That is, the end of the second accumulation period matches the end of a full frame. Further, the second accumulation period is an integral multiple (four times in the example of Fig. 7) of the first accumulation period.

However, the second accumulation period does not need to be an integral multiple of the first accumulation period, the second accumulation period is longer than the first accumulation period, and it is only required that the end of the second accumulation period in the same row is later than the end of the first accumulation period.

That is, an image with a short accumulation period and an image with a long accumulation period are created, a timing at which the short accumulation period ends is set to be earlier than a timing at which the long accumulation period ends, and as soon as the short accumulation period ends, the image is output to a recognition unit at the subsequent stage. Then, a subject is recognized based on a signal generated during at least the first accumulation period. The recognition unit 604 recognizes the subject based on the signal generated during at least the first accumulation period.

Thus, image recognition can be performed only for each full frame period in the related art, but in the present embodiment, image recognition can be performed for each 1/4 full frame period, and obstacles and the like can be rapidly recognized, for example, when a movable apparatus is moving at high speed. Furthermore, when an accumulation period is further shortened, image recognition can be performed more frequently.

Thus, it is possible to rapidly apply the brakes. Alternatively, it is possible to avoid obstacles early. Furthermore, since image recognition can be performed for each 1/4 full frame period, image recognition of obstacles and the like that appear in the meantime can be performed timely.

Furthermore, a display device according to the present embodiment displays a signal generated during at least the second accumulation period as an image. An image in the second accumulation period with a long accumulation period can improve a contrast and is thus suitable as a display image. That is, an image in the first accumulation period with a short accumulation period is suitable for rapid subject recognition, and an image in the second accumulation period with a long accumulation period is suitable for display images.

Since the APD is used in the present embodiment, an accumulation period can be overlapped because accumulated charges do not deteriorate due to a readout operation, unlike a CMOS sensor or the like. Furthermore, since there is no readout noise, the original signal does not deteriorate no matter how many times it is read out through one accumulation.

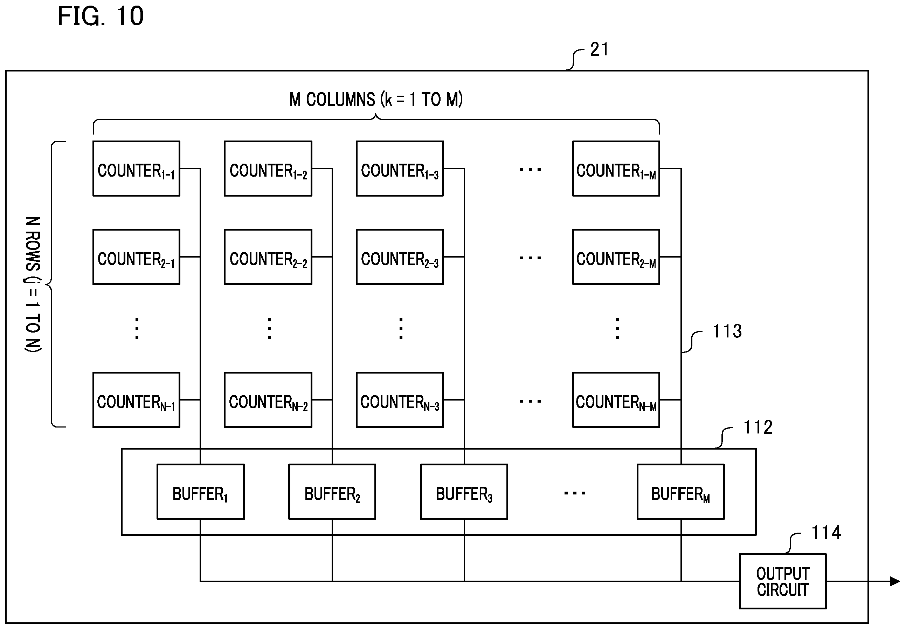

Fig. 10 is a diagram showing an example of a relationship between the counter circuit and the buffer in the embodiment. Fig. 10 shows a state in which the counter circuits 211 in the signal processing circuit 103 in Fig. 3 are arranged in N rows and M columns, and the counter circuits are represented as a counter 1-1 to a counter N-M.

Further, a buffer 1 to a buffer M in Fig. 10 indicate buffers included in the readout circuit 112 in Fig. 3. An output circuit 114 in Fig. 10 corresponds to the output circuit 114 in Fig. 3.

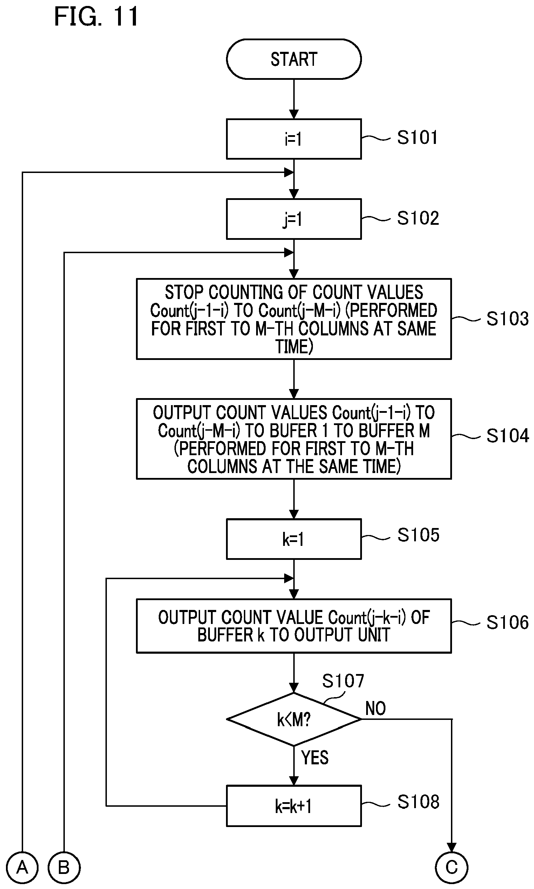

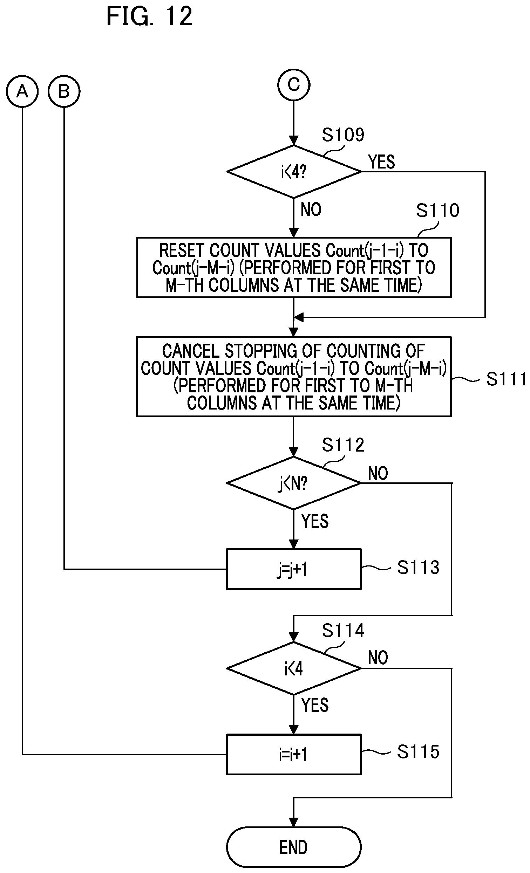

Fig. 11 is a flowchart showing details of an example of driving of the photoelectric conversion element in the embodiment, and Fig. 12 is a flowchart showing a continuation of Fig. 11. Operations in respective steps of the flowcharts of Figs. 11 and 12 are sequentially performed by causing a CPU or the like serving as a computer in the camera control unit 605 to execute a computer program stored in a memory.

In Figs. 12 and 13, i corresponds to a frame number in a frame 1_i in Figs. 7 and 8 and takes a value from 1 to 4. j represents the number of rows in Fig. 10 and takes a value from 1 to N. k represents the number of columns in Fig. 10 and takes a value from 1 to M. Further, a count value of a counter circuit j-k in a j-th row and a k-th column in the frame 1_i is assumed to be Count (j-k-i). Driving when reading out the full frame 1 will be described below.

In step S101, i = 1 is set, and then in step S102, j = 1 is set. That is, the first row of the first frame is targeted.

Next, in step S103, counting of a Count(j-1-i) to a Count(j-M-i) is stopped. At this time, counting is stopped for columns 1 to M at the same time. This operation corresponds to a counting stop operation at time T0, T3, T6, T9, or T12 for the first row in Fig. 7. Furthermore, this operation corresponds to a counting stop operation at time T2, T5, T8, T11, or T14 for the N-th row.

Next, in step S104, count values Count(j-1-i) to Count(j-M-i) are output to the buffer 1 to the buffer M, respectively. At this time, the count values are output to the buffers at the same time for the columns 1 to M.

Next, in step S105, k = 1 is set, and in step S106, the count value Count(j-k-i) of the buffer k is output to the output circuit 114. This operation corresponds to an operation of reading out a signal of a buffer in the leftmost column in Fig. 10 from the output circuit.

Next, in step S107, it is determined whether k < M. In the case of Yes, k = k + 1 is set in step S108, k is incremented by 1, and the processing returns to step S106 to perform the operation of step S106. This operation corresponds to an operation of reading a signal of a buffer in the second column from the left in Fig. 10 from the output circuit.

In the case of No in step S107, that is, when k = M, it means that a signal of a buffer in the M-th column in Fig. 10 has been read out from the output circuit.

Next, in step S109, it is determined whether i < 4. In the case of No, that is, when i = 4, the count values Count(j-1-i) to Count(j-M-i) are reset. At this time, reset is performed for the columns 1 to M at the same time. This operation corresponds to an operation at time T13 for the first row and at time T15 for the N-th row in Fig. 7. In the case of Yes in step S109, the processing proceeds to step S111.

Next, in step S111, the stopping of counting of the count values Count(j-1-i) to Count(j-M-i) is canceled. At this time, the stopping of counting is canceled for columns 1 to M at the same time. This operation corresponds to an operation at time T1, T4, T7, T10, or T13 for the first row in Fig. 7. Furthermore, this operation corresponds to an operation at T3, T6, T9, T12, or T15 for the N-th row.

Next, in step S112, it is determined whether j < N. In the case of Yes, in step S113, j = j + 1 is set, j is incremented by 1, and the processing returns to step S103. This corresponds to an operation for starting reading the next row.

When the determination result in step S112 is No, it means that reading of all rows has been terminated, and thus the processing proceeds to step S114 to determine whether i < 4. When the determination result in step S114 is Yes, the processing proceeds to step S115 to set i = i + 1 and increment i by 1, and the processing returns to step S102. This operation corresponds to an operation of starting reading the next frame 1_2.

In the case of No in step S114, that is, when i = 4, it means that the reading of the full frame 1 has been terminated, and thus the processing ends. In this manner, the signals accumulated in the photoelectric conversion element 100 can be sequentially read out.

Although the present invention has been described above in detail based on its preferred embodiment, the present invention is not limited to the above-described embodiment and can be modified in various ways based on the spirit of the present invention, and they are not excluded from the scope of the invention.

For example, in the above-described embodiment, accumulation is performed for a minimum of 1/4 full frame period, but the length of the shortest accumulation period may be changed to, for example, a 1/5 full frame period or a 1/3 full frame period in accordance with the accuracy of recognition of the recognition unit 604. Alternatively, the length of the shortest accumulation period may be changed depending on the brightness of a subject.

Furthermore, even when a readout period is set to a 1/4 full frame period, the counter circuit may be reset in the middle of the accumulation period of the frame 1_1 in Fig. 7 in accordance with the brightness of the subject, image recognition accuracy, and the like. Thereby, the actual accumulation period may be shorter than the 1/4 full frame period.

Alternatively, the counter circuit in the first row may be reset once at time T4 in Fig. 7, or the like. Thereby, the count values of the frame 1_2, the frame 1_3, and the frame 1_4 for which reading is started at time T6, time T9, and time T12, respectively, may be adjusted.

In addition, an accumulation period of the sensor may be set as an integer multiple of a readout time of one row, but the number of rows at which counting is stopped is added to the set number of rows, and accumulation may be started at an earlier timing by the total time. By doing this, even when counting is stopped midway, it is possible to achieve an accumulation period for an accurately set number of rows.

In the present embodiment, counting of one row is stopped at the time of reading a count value of the row, but when a period of time required for readout is short as compared with a count-up interval and a timing can be controlled, counting may not necessarily be stopped.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to a photoelectric conversion device or the like through a network or various storage media. Then, a computer (or a CPU, an MPU, or the like) of the photoelectric conversion device or the like may be configured to read and execute the program. In such a case, the program and the storage medium storing the program configure the present invention.

In addition, the present invention includes those realized using at least one processor or circuit configured to perform function of the embodiments explained above, for example. Dispersion processing may be performed using a plurality of processors.

This application claims the benefit of priority from Japanese Patent Application No. 2023-088836, filed on May 30, 2023, which is hereby incorporated by reference herein in its entirety.

## Claims

1. A photoelectric conversion device comprising:
a plurality of pixels each including a sensor unit that emits pulses according to a incident photons, and a counter that counts the number of pulses; and
a control unit that generates a signal based on a difference between a count value of the counter at the start of an accumulation period and a count value of the counter at the end of the accumulation period, and performs control so that a signal generated during a first accumulation period is output between the end of the first accumulation period and the end of a second accumulation period, the first accumulation period and the second accumulation period being included in a full frame period, and the first accumulation period being shorter than the second accumulation period.

2. The photoelectric conversion device according to claim 1, wherein the control unit performs control so that counting in the counter is stopped at the time of reading out the count value of the counter.

3. The photoelectric conversion device according to claim 1, wherein the first accumulation period and the second accumulation period overlap each other.

4. The photoelectric conversion device according to claim 1, wherein the first accumulation period and the second accumulation period start at the same time.

5. The photoelectric conversion device according to claim 1, wherein the end of the second accumulation period matches the end of the full frame period.

6. The photoelectric conversion device according to claim 1, further comprising a recognition unit that recognizes a subject based on at least a signal generated during the first accumulation period.

7. The photoelectric conversion device according to claim 6, wherein the recognition unit further recognizes the subject based on a signal generated during the second accumulation period.

8. The photoelectric conversion device according to claim 1, further comprising a display unit that displays at least a signal generated during the second accumulation period as an image.

9. The photoelectric conversion device according to claim 1, wherein the sensor unit includes an avalanche photodiode.

10. A movable apparatus comprising:
a plurality of pixels each including a sensor unit that emits pulses according to incident photons, and a counter that counts the number of pulses; and
a control unit that generates a signal based on a difference between a count value of the counter at the start of an accumulation period and a count value of the counter at the end of the accumulation period, and performs control so that a signal generated during a first accumulation period is output between the end of the first accumulation period and the end of a second accumulation period, the first accumulation period and the second accumulation period being included in a full frame period, and the first accumulation period being shorter than the second accumulation period; and
a movement control unit configured to control an operation of the movable apparatus.

11. A photoelectric conversion method for performing photoelectric conversion using a plurality of pixels each including a sensor unit that emits pulses according to incident photons, and a counter that counts the number of pulses, the photoelectric conversion method comprising:
generating a signal based on a difference between a count value of the counter at the start of an accumulation period and a count value of the counter at the end of the accumulation period; and
performing control so that a signal generated during a first accumulation period is output between the end of the first accumulation period and the end of a second accumulation period, the first accumulation period and the second accumulation period being included in a full frame period, and the first accumulation period being shorter than the second accumulation period.

12. A non-transitory computer-readable storage medium configured to store a computer program to control a photoelectric conversion device,
the photoelectric conversion device including a plurality of pixels, and each of the pixels including
a sensor unit that emits pulses according to incident photons, and
a counter that counts the number of pulses, and
the program including instructions for executing following processes:
generating a signal based on a difference between a count value of the counter at the start of an accumulation period and a count value of the counter at the end of the accumulation period; and
outputting a signal generated during a first accumulation period between the end of the first accumulation period and the end of a second accumulation period, the first accumulation period and the second accumulation period being included in a full frame period, and the first accumulation period being shorter than the second accumulation period.
